# EUROPEAN PATENT APPLICATION

(11) **EP 3 725 721 A1**
(43) Date of publication of application: **21.10.2020**
(21) Application number: 18889424.0
(22) Date of filing: 28.11.2018
(51) Int. Cl.: B65H 75/44, H02J 7/00

(54) **TAKE-UP DEVICE FOR MOBILE ENERGY SUPPLEMENTATION VEHICLE, AND MOBILE ENERGY SUPPLEMENTATION VEHICLE**

(30) Priority: 12.12.2017 CN 201721729793 U
(71) Applicant: Nio Nextev Limited, Hong Kong (CN)
(72) Inventor: YANG, Changcheng, Shanghai 201804 (CN); HE, Xu, Shanghai 201804 (CN); ZHAO, Zhiling, Shanghai 201804 (CN); DAI, Chensong, Shanghai 201804 (CN); YANG, Chao, Shanghai 201804 (CN)
(74) Representative: Vossius & Partner Patentanwälte Rechtsanwälte mbB
(86) International application number: PCT/CN2018/117964
(87) International publication number: WO 2019/114551

(57) **Abstract**

Provided are a take-up device for a mobile energy replenishment vehicle, and a mobile energy replenishment vehicle. The take-up device (1) comprises: a rotation unit (11), the rotation unit (11) comprising a first conductive portion (111) and a second conductive portion (112), wherein the first conductive portion (111) is electrically connected to the second conductive portion (112), the first conductive portion (111) allows a first cable (21) to be connected thereto, the second conductive portion (112) is rotatable relative to the first conductive portion (111), and the second conductive portion (112) allows a second cable (22) to be connected thereto; and a take-up unit (12), wherein the take-up unit (12) is connected to the second conductive portion (112), and the take-up unit (12) allows the second cable (22) to be wound therearound. By means of the arrangement of the take-up device, the cable can be more organized during taking-up and paying-off, the product is more visually attractive and tidier, and the convenience and efficiency of charging operations are improved.

## Description

### Technical Field

The invention relates to the technical field of battery charging and swapping, and in particular to a take-up device for a mobile energy replenishment vehicle, and a mobile energy replenishment vehicle.

### Background Art

With the popularization of new energy vehicles, how to effectively provide rapid and effective energy replenishment for vehicles with insufficient energy has become a very concerned problem for vehicle owners and major manufacturers. Taking electric vehicles as an example, in order to realize rapid energy replenishment, especially emergency energy replenishment, of the electric vehicles, the solutions of mobile energy replenishment vehicles are generally used in the market at present. Compared with the energy replenishment methods for battery charging and swapping stations and charging piles, mobile energy replenishment vehicles make up for the vacancy in the energy replenishment market due to their advantages of mobility, fast charging speed, etc. The important function of the mobile energy replenishment vehicles is to quickly replenish the electric vehicles with energy. Based on the energy replenishment power of 60 kW for calculation, a vehicle needs to be equipped with a 200 A direct-current charging gun line, and the corresponding cable is at least the national standard direct-current cable of 50 square millimetres. Generally, if the vehicle is equipped with a 7-meter-long standard direct-current cable of 50 square millimetres and a charging gun, the sum of the weight of the cable and the weight of a charging gun head exceeds 20 kg.

However, charging guns and cables provided in the mobile energy replenishment vehicles currently available in the market are usually independently coiled inside cargo boxes or toolboxes of the vehicles. During use, the charging guns and the cables need to be carried from the inside to the outside of the vehicles for dispersion, and the charging guns are then connected to energy replenishment ports of the electric vehicles to start charging. After use, the cables need to be carried to mobile charging vehicles, and to be coiled. Due to the heavy weight of the charging guns and the cables, and the poor flexibility of the cables of 50 square millimetres, it is both troublesome and laborious for service personnel to move the charging guns and the cables, so that such an arrangement greatly affects the convenience of energy replenishment, reduces the efficiency of energy replenishment, and is contrary to the starting point of rapid energy replenishment.

Accordingly, there is a need in the art for a new take-up device for a mobile energy replenishment vehicle to solve the above problems.

### Summary of the Invention

In order to solve the above-mentioned problems in the prior art, that is, to solve the problems of poor convenience and low efficiency of the existing mobile energy replenishment vehicles in an operating mode in which the charging guns and the cables are manually carried, the invention provides a take-up device for a mobile energy replenishment vehicle. The take-up device comprises: a rotation unit comprising a first conductive portion and a second conductive portion, wherein the first conductive portion is electrically connected to the second conductive portion, the first conductive portion allows a first cable to be connected thereto, the second conductive portion is rotatable relative to the first conductive portion, and the second conductive portion allows a second cable to be connected thereto; and a take-up unit, wherein the take-up unit is connected to the second conductive portion, and the take-up unit allows the second cable to be wound therearound.

In a preferred technical solution of the take-up device for a mobile energy replenishment vehicle, the rotation unit further comprises a conductive member via which the first conductive portion is able to be electrically connected to the second conductive portion.

In a preferred technical solution of the take-up device for a mobile energy replenishment vehicle, the take-up unit comprises a first cover plate, a second cover plate, and a reel provided between the first cover plate and the second cover plate, wherein the reel is sleeved on the second conductive portion.

In a preferred technical solution of the take-up device for a mobile energy replenishment vehicle, the reel is provided with a threading hole, which allows the second cable to pass therethrough and be connected to the second conductive portion.

In a preferred technical solution of the take-up device for a mobile energy replenishment vehicle, the take-up device further comprises a restoring unit configured to enable, after the take-up unit rotates relative to the first conductive portion, the take-up unit to rotate back in a reversed direction relative to the first conductive portion.

In a preferred technical solution of the take-up device for a mobile energy replenishment vehicle, the restoring unit is a coil spring, one end of the coil spring is fixedly connected to the first conductive portion, and the other end of the coil spring is fixedly connected to the take-up unit or the second conductive portion.

In a preferred technical solution of the take-up device for a mobile energy replenishment vehicle, the take-up device further comprises a limiting unit configured to enable, after the take-up unit rotates relative to the first conductive portion, the take-up unit to be fixed relative to the first conductive portion.

In a preferred technical solution of the take-up device for a mobile energy replenishment vehicle, the limiting unit is a pipe clamp connected to the take-up unit, and the pipe clamp allows the second cable to pass therethrough and is able to clamp the second cable, so as to fix the take-up unit relative to the first conductive portion.

In a preferred technical solution of the take-up device for a mobile energy replenishment vehicle, the take-up device further comprises a mounting bracket connected to one end of the first conductive portion, and the take-up device is able to be mounted on the mobile energy replenishment vehicle via the mounting bracket.

The invention further provides a mobile energy replenishment vehicle, comprising an energy storage device, a charging gun, a first cable, a second cable, and a take-up device according to any one of the above solutions, wherein a first end of the first cable is connected to the energy storage device, a second end of the first cable is connected to the first conductive portion, a first end of the second cable is connected to the second conductive portion, and a second end of the second cable is wound around the take-up unit and then connected to the charging gun.

It can be understood by those skilled in the art that in a preferred technical solution of the invention, the take-up device comprises a rotation unit and a take-up unit. The rotation unit comprises a first conductive portion and a second conductive portion, wherein the first conductive portion is electrically connected to the second conductive portion, the first conductive portion allows a first cable to be connected thereto, the second conductive portion is rotatable relative to the first conductive portion, and the second conductive portion allows a second cable to be connected thereto. The take-up unit is connected to the second conductive portion, and the take-up unit allows the second cable to be wound therearound. By way of winding the cable around the take-up unit and connecting the take-up unit to the second conductive portion to rotate the take-up unit relative to the first conductive portion, the invention enables the cable of a mobile energy storage vehicle to be more organized during taking-up and paying-off, the product is more visually attractive and tidier, and the convenience and efficiency of charging operations are improved. That is to say, by means of the above arrangement, the invention solves the problems of poor convenience and low efficiency in the existing mobile energy replenishment vehicles in an operating mode in which the charging guns and the cables are manually carried, and improves the user experience. In addition, the arrangement of the electrical connection between the first conductive portion and the second conductive portion can also prevent the cable from being entangled on the take-up device in the taking-up and paying-off processes, improve the stability of the take-up device, and prolong the service life of the cable.

### Brief Description of the Drawings

A take-up device for a mobile energy replenishment vehicle, and a mobile energy replenishment vehicle of the invention will be described below with reference to the accompanying drawings and in conjunction with a mobile charging vehicle. In the accompanying drawings:
Fig. 1 is a front view of a take-up device for a mobile charging vehicle of the invention;
Fig. 2 is a top view of the take-up device for a mobile charging vehicle of the invention;
Fig. 3 is a sectional view taken through A-A of Fig. 1;
Fig. 4 is a partial enlarged view of part B in Fig. 3;
Fig. 5A is a structural schematic view of a pipe clamp of the invention (in an unlocked state);
Fig. 5B is a structural schematic view of the pipe clamp of the invention (in a locked state);
Fig. 6 is a front view of a mobile charging vehicle of the invention; and
Fig. 7 is a right side view of the mobile charging vehicle of the invention.

### List of reference numerals

1. Take-up device; 11. Rotation unit; 111. First conductive portion; 112. Second conductive portion; 12. Take-up unit; 121. First cover plate; 122. Second cover plate; 123. Reel; 13. Restoring unit; 14. Limiting unit; 15. Mounting bracket; 21. First cable; 22. Second cable; 23. Charging gun; 3. Mobile charging vehicle.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although the take-up device in the accompanying drawings is provided on a chassis of a mobile charging vehicle, such a positional relationship is not fixed, those skilled in the art can make amendments according to requirements so as to adapt to specific application scenarios. For example, the take-up device may also be provided inside a cargo box, or on a rear door of the cargo box, etc. of the mobile charging vehicle.

It should be noted that in the description of the invention, the terms, such as "centre", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For a person skilled in the art, the specific meaning of the above terms in the invention can be interpreted according to the specific situation.

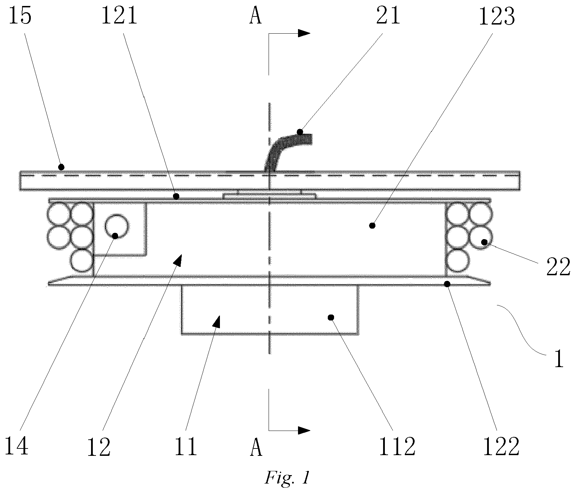

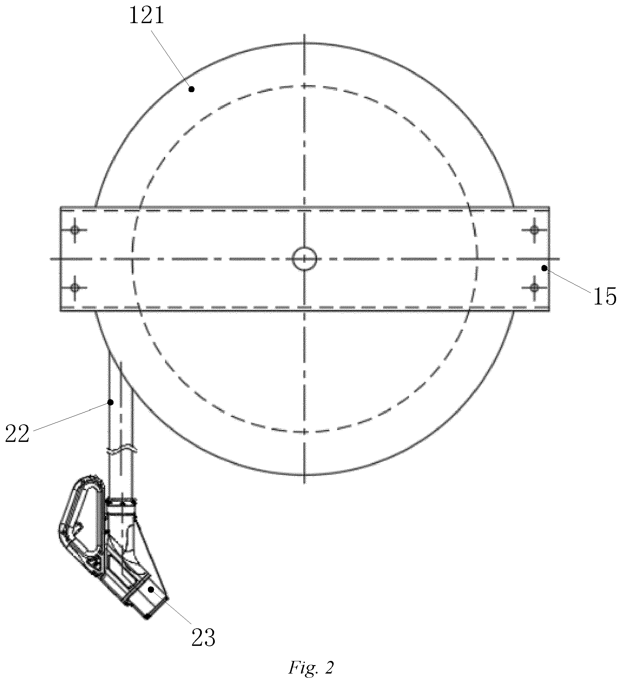

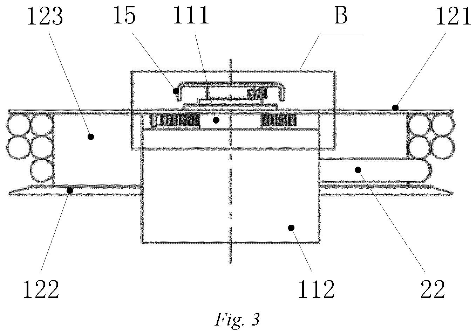

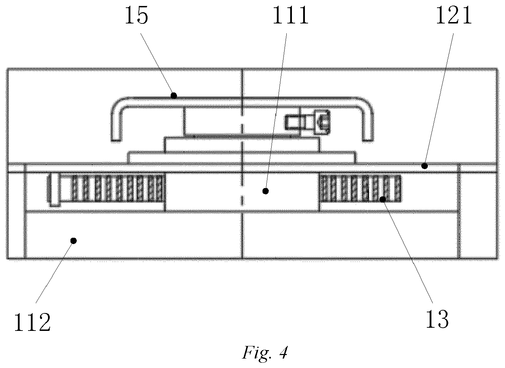

Reference is first made to Figs. 1 to 4, wherein Fig. 1 is a front view of a take-up device for a mobile charging vehicle of the invention; Fig. 2 is a top view of the take-up device for a mobile charging vehicle of the invention; Fig. 3 is a sectional view taken through A-A of Fig. 1; and Fig. 4 is a partial enlarged view of part B in Fig. 3.

As shown in Figs. 1 to 4, the take-up device 1 for a mobile charging vehicle 3 of the invention (hereinafter referred to as the take-up device 1) mainly comprises a rotation unit 11, a take-up unit 12, a restoring unit 13, a limiting unit 14, and a mounting bracket 15. The rotation unit 11 further comprises a first conductive portion 111, a second conductive portion 112, and a conductive member (not shown). The first conductive portion 111 can be electrically connected to the second conductive portion 112, and the first conductive portion 111 allows a first cable 21 to be connected thereto. The second conductive portion 112 can rotate relative to the first conductive portion 111, and the second conductive portion 112 allows a second cable 22 to be connected thereto. The take-up unit 12 is connected to the second conductive portion 112, and the take-up unit 12 allows the second cable 22 to be wound therearound. That is to say, the take-up unit 12 can rotate relative to the first conductive portion 111. The restoring unit 13 enables, after the take-up unit 12 rotates relative to the first conductive portion 111, the take-up unit 12 to rotate back in a reversed direction relative to the first conductive portion 111. The limiting unit 14 then enables, after the take-up unit 12 rotates relative to the first conductive portion 111, the take-up unit 12 to be fixed relative to the first conductive portion 111.

After the take-up device 1 is connected to the mobile charging vehicle 3, one end of the first cable 21 is connected to an energy storage device (such as an energy storage battery pack) of the mobile charging vehicle 3, and the other end thereof is connected to the first conductive portion 111. The first conductive portion 111 is electrically connected to the second conductive portion 112 via the conductive member. One end of the second cable 22 is connected to the second conductive portion 112, and the other end thereof is wound around the take-up unit 12 and then connected to a charging gun 23. During use, simply with the need of an operator to pull the charging gun 23, the second cable 22 can be pulled out naturally during the rotation of the take-up unit 12 relative to the first conductive portion 111. After the charging gun 23 reaches a charging position, the operator can use the limiting device to fix the second cable 22. After the charging is completed, by unlocking the limiting device, the second cable 22 can be taken-up back to the take-up unit 12 under the action of the restoring unit 13 and is automatically coiled.

As can be seen from the above description, by means of the arrangement of the take-up device 1, the invention enables the operator to realize fast, convenient, and automatic take-up of the cable without manually carrying the charging gun 23 and the second cable 22, thereby reducing the labour intensity of the operator, and improving the take-up efficiency and the space utilization rate of the mobile charging vehicle 3. By means of the arrangement in which the first conductive portion 111 is electrically connected to the second conductive portion 112 via the conductive member, and the cable between the energy storage device and the charging gun 23 is divided into two parts: a first cable 21 and a second cable 22, the situation is effectively avoided where the second cable 22 is entangled on the take-up device 1 in the taking-up and paying-off processes, the stability of the take-up device 1 is improved, and the service life of the cable is prolonged.

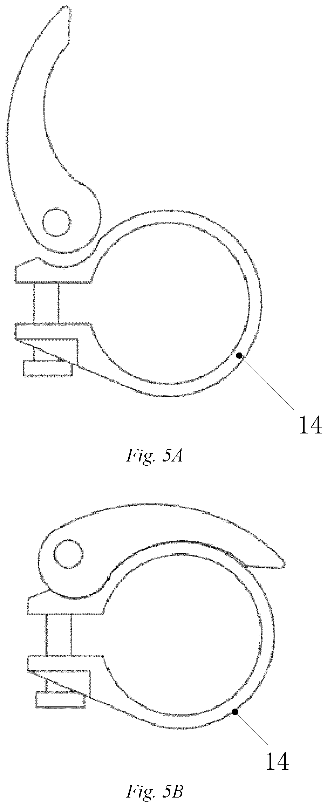

The take-up device of the invention will be described in detail below with reference to Figs. 1 to 5B. Fig. 5A is a structural schematic view of a pipe clamp of the invention (in an unlocked state); and Fig. 5B is a structural schematic view of the pipe clamp of the invention (in a locked state).

As shown in Fig. 3, in a preferred embodiment, the rotation unit 11 may be implemented by means of an electrical slip ring. The brush slip ring comprises a stator (equivalent to the first conductive portion 111), a rotor (equivalent to the second conductive portion 112), and a brush (not shown, which is equivalent to the conductive member) provided on the stator. The take-up unit 12 comprises a first cover plate 121, a second cover plate 122, and a reel 123 provided between the first cover plate 121 and the second cover plate 122. The reel 123 is sleeved on the rotor. The reel 123 is provided with a threading hole (not shown). One end of the first cable 21 is fixedly connected to the stator. One end of the second cable 22 is fixedly connected to the rotor through the threading hole (referring to Fig. 3), and the other end of the second cable 22 is wound around the reel 123 and then fixedly connected to the charging gun 23 (referring to Fig. 2). Referring to Fig. 4, preferably, the restoring unit 13 is a coil spring. One end of the coil spring is fixedly connected to the stator, and the other end of the coil spring is fixedly connected to the reel 123 or the rotor. When the reel 123 rotates relative to the stator by means of the rotor, the coil spring is contracted to generate elastic potential energy, which enables the reel 123 to rotate back. Referring to Figs. 5A and 5B, preferably, the limiting unit 14 is a pipe clamp fixedly connected to the reel 123. The second cable 22 is wound around the reel 123 and then connected to the charging gun 23 through the pipe clamp. When the pipe clamp is in an unlocked state, the second cable 22 can pass freely through the pipe clamp. When the pipe clamp is in a locked state, the pipe clamp clamps the second cable 22 and generates a relatively large frictional force with the second cable 22, to prevent the second cable 22 from moving freely, thereby further fixing the reel 123 relative to the stator. Referring back to Figs. 2 and 3, preferably, the mounting bracket 15 is a metal plate, such as a steel plate or an aluminium alloy plate. The mounting bracket 15 is fixedly connected to one end of the stator (an upper end shown in Fig. 3), and the mounting bracket 15 may be fixed onto the mobile charging vehicle 3 via bolts or screws, thereby further connecting the take-up device 1 to the mobile charging vehicle 3.

In the specific embodiment described above, thanks to the arrangement in which the second cable 22 is wound around the take-up device 1, the invention can properly store the second cable 22, make the second cable 22 more organized, reduce the labour intensity of the operator, and optimize the storage space of the mobile charging vehicle 3. Thanks to the arrangement in which the brush slip ring is used as the rotation unit 11, the invention can improve the stability of connection between the energy storage device and the charging gun 23, and prevent the second cable 22 from being entangled with the stator together when taking-up and paying-off the second cable 22, to improve the use stability of the take-up device 1. Thanks to the arrangement of the coil spring, the second cable 22 can be automatically taken-up after being pulled out, improving the take-up speed and take-up efficiency of the cable. Thanks to the arrangement of the pipe clamp, when the second cable 22 is pulled out, the damage to the cable and the charging gun 23 that is caused by the second cable 22 being in a straightened state under a reverse force from the coil spring can be effectively prevented, thereby prolonging the service life of the charging gun 23 and the cable. That is to say, by means of the preferred embodiment described above, the invention solves the problems of poor convenience and low efficiency in the existing mobile energy replenishment vehicles in an operating mode in which the charging guns 23 and the cables are manually carried, such that the charging gun 23 and the cable can be more organized during taking-up and paying-off, and the product is more visually attractive and tidier, thereby reducing the preparation time before charging, improving the efficiency of the charging process, and significantly improving the usage experience of the operator.

It should be noted that the above preferred embodiment is merely used to illustrate the principles of the invention, and is not intended to limit the scope of protection of the invention. Those skilled in the art can adjust the above arrangements without deviating from the principle of the invention, so that the invention can be applied to more specific application scenarios. As an example, the brush slip ring may also be replaced by another structure with the same function. Instead of the coil spring, the restoring unit 13 may be in another form such as a torsion spring, as long as this form enables the take-up unit 12 to rotate back automatically. As another example, the limiting unit 14 may also be fixed onto the first cover plate 121 or the second cover plate 122, and may also be in the form of a clamp or a hose clamp, etc. As still another example, the mounting bracket may also be provided at a lower end of the stator, and so on.

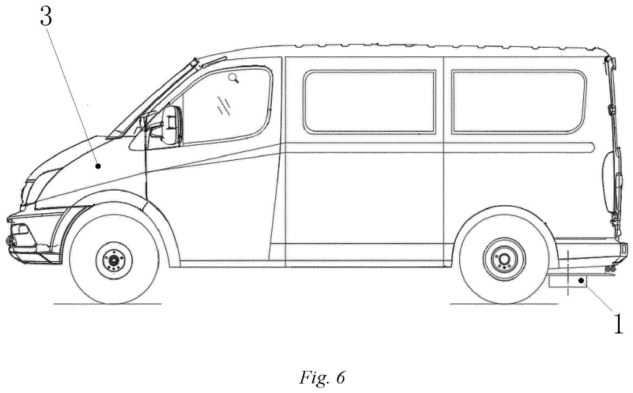

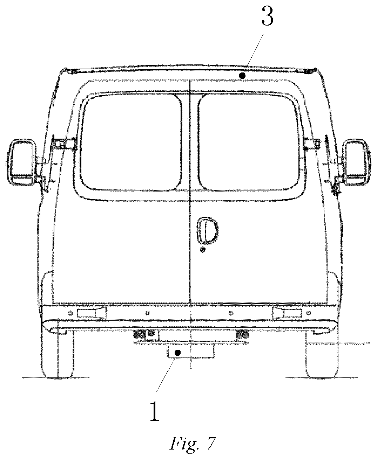

The mobile charging vehicle 3 of the invention will be briefly described below with reference to Figs. 6 and 7. Fig. 6 is a front view of the mobile charging vehicle 3 of the invention; and Fig. 7 is a right side view of the mobile charging vehicle 3 of the invention.

Referring to Figs. 6 and 7 and in combination with Figs. 1 to 5, as shown, the invention also provides a mobile charging vehicle 3, which mobile charging vehicle 3 comprises an energy storage device (such as an energy storage battery pack), a charging gun 23, a first cable 21, a second cable 22, and a take-up device 1 as described above. A first end of the first cable 21 is connected to the energy storage device, and a second end of the first cable 21 is connected to a stator of a brush slip ring. A first end of the second cable 22 passes through a threading hole of the reel 123 and is connected to a rotor of the brush slip ring, and a second end of the second cable 22 is wound around the reel 123 and is connected to the charging gun 23 after passing through a pipe clamp. Preferably, the take-up device 1 may be screwed, via a mounting bracket 15, to the place where a spare tire is located at the bottom of the vehicle as shown in Figs. 6 and 7. Of course, the take-up device 1 may also be arranged at any position of the mobile charging vehicle 3, as long as this position is convenient for the operator to pull out the charging gun 23, for example, it may also be arranged inside a cargo box.

During use, the operator simply needs to naturally pull the charging gun 23 out of the take-up device 1, and the length can be freely determined according to requirements. During the process of pulling the charging gun 23 and the second cable 22, the second cable 22 drives the reel 123 to rotate. The rotation of the reel 123 causes a coil spring to contract and generate elastic potential energy. After the charging gun 23 is pulled out to the desired length, the pipe clamp is locked to fix the second cable 22, such that the reel 123 stores the elastic potential energy and cannot rotate back. After the charging is completed, the pipe clamp is unlocked, and the reel 123 automatically rotates back with the elastic potential energy stored by the coil spring. During the backward rotation, the second cable 22 is taken-up and automatically coiled.

As can be seen from the above description, the mobile charging vehicle 3 of the invention is provided with a take-up device 1, such that the convenience of operation during fast charging is optimized, the charging operation is more convenient and labour-saving, the cable is more organized during taking-up and paying-off, and the product is more visually attractive and tidier. Moreover, after the second cable 22 and the charging gun 23 are wound around the take-up device 1, it can also be promoted on a large scale as a modular device.

Finally, it should be noted that although the invention is described in conjunction with the mobile charging vehicle 3, the take-up device 1 of the invention can obviously also be applied to other mobile energy storage vehicles, such as emergency power supply vehicles. In addition, although the charging cable is divided into the first cable 21 and the second cable 22 by the take-up device 1 in the solutions, the materials and performance parameters of the first cable 21 and the second cable 22 may be unified, that is, cables of the same specification may be used as the first cable 21 and the second cable 22 in order to improve the stability of a charging line.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. A take-up device for a mobile energy replenishment vehicle, **characterized in that** the take-up device comprises:
a rotation unit comprising a first conductive portion and a second conductive portion, wherein the first conductive portion is electrically connected to the second conductive portion, the first conductive portion allows a first cable to be connected thereto, the second conductive portion is rotatable relative to the first conductive portion, and the second conductive portion allows a second cable to be connected thereto; and
a take-up unit, wherein the take-up unit is connected to the second conductive portion, and the take-up unit allows the second cable to be wound therearound.

2. The take-up device for a mobile energy replenishment vehicle according to claim 1, **characterized in that** the rotation unit further comprises a conductive member via which the first conductive portion is able to be electrically connected to the second conductive portion.

3. The take-up device for a mobile energy replenishment vehicle according to claim 2, **characterized in that** the take-up unit comprises a first cover plate, a second cover plate, and a reel provided between the first cover plate and the second cover plate, wherein the reel is sleeved on the second conductive portion.

4. The take-up device for a mobile energy replenishment vehicle according to claim 3, **characterized in that** the reel is provided with a threading hole, which allows the second cable to pass therethrough and be connected to the second conductive portion.

5. The take-up device for a mobile energy replenishment vehicle according to any one of claims 1 to 4, **characterized in that** the take-up device further comprises a restoring unit configured to enable, after the take-up unit rotates relative to the first conductive portion, the take-up unit to rotate back in a reversed direction relative to the first conductive portion.

6. The take-up device for a mobile energy replenishment vehicle according to claim 5, **characterized in that** the restoring unit is a coil spring, one end of the coil spring is fixedly connected to the first conductive portion, and the other end of the coil spring is fixedly connected to the take-up unit or the second conductive portion.

7. The take-up device for a mobile energy replenishment vehicle according to claim 5, **characterized in that** the take-up device further comprises a limiting unit configured to enable, after the take-up unit rotates relative to the first conductive portion, the take-up unit to be fixed relative to the first conductive portion.

8. The take-up device for a mobile energy replenishment vehicle according to claim 7, **characterized in that** the limiting unit is a pipe clamp connected to the take-up unit, and the pipe clamp allows the second cable to pass therethrough and is able to clamp the second cable, so as to fix the take-up unit relative to the first conductive portion.

9. The take-up device for a mobile energy replenishment vehicle according to claim 7, **characterized in that** the take-up device further comprises a mounting bracket connected to one end of the first conductive portion, and the take-up device is able to be mounted on the mobile energy replenishment vehicle via the mounting bracket.

10. A mobile energy replenishment vehicle, **characterized by** comprising an energy storage device, a charging gun, a first cable, a second cable, and a take-up device according to any one of claims 1 to 9, wherein a first end of the first cable is connected to the energy storage device, a second end of the first cable is connected to the first conductive portion, a first end of the second cable is connected to the second conductive portion, and a second end of the second cable is wound around the take-up unit and then connected to the charging gun.
